# EUROPEAN PATENT APPLICATION

(11) **EP 4 418 445 A1**
(43) Date of publication of application: **21.08.2024**
(21) Application number: 22931474.5
(22) Date of filing: 18.03.2022
(51) Int. Cl.: H01M 50/627, H01M 50/609

(54) **BATTERY CELL, BATTERY, ELECTRICAL DEVICE, AND METHOD AND DEVICE FOR MANUFACTURING BATTERY CELL**

(71) Applicant: Contemporary Amperex Technology Co., Limited, Ningde City, Fujian 352100 (CN)
(72) Inventor: CHEN, Long, 352100 (CN); LIN, Denghua, 352100 (CN); HUANG, Shoujun, 352100 (CN); CHEN, Xinxiang, 352100 (CN); ZHENG, Yulian, 352100 (CN); WANG, Peng, 352100 (CN); JIN, Haizu, 352100 (CN)
(74) Representative: Ran, Handong
(86) International application number: PCT/CN2022/081842
(87) International publication number: WO 2023/173443

(57) **Abstract**

Embodiments of the present application provide a battery cell, a battery, an electrical device, and a method and device for manufacturing a battery cell. The battery cell comprises: a housing having an accommodating cavity, the housing having a first wall, and the first wall being provided with a liquid injection hole; an electrode assembly accommodated in the accommodating cavity; a flow guide piece arranged between the first wall and the electrode assembly, the flow guide piece being provided with a liquid accumulation groove, an opening of the liquid accumulation groove facing the first wall; a bottom wall of the liquid accumulation groove is provided with a through hole, the liquid accumulation groove is used for collecting an electrolyte injected through the liquid injection hole, and the electrolyte in the liquid accumulation groove flows through the through hole towards the electrode assembly. The battery cell, battery, electrical device and method and device for manufacturing the battery cell of the embodiments of the present application allow for increasing the infiltration efficiency and the infiltration effect of a battery cell.

## Description

### TECHNICAL FIELD

This application relates to the field of battery technology, and in particular, to a battery cell, a battery, an electrical device, and a method and equipment for manufacturing a battery cell.

### BACKGROUND

Energy conservation and emission reduction are key to sustainable development of the automobile industry. Based on this situation, electric vehicles have become an important part of the sustainable development of the automobile industry by virtue of energy saving and environmental friendliness. Battery technology is crucial to development of electric vehicles.

In the rapid development of battery technology, how to improve the processing and production efficiency of batteries is an urgent technical issue in the battery technology.

### SUMMARY

Some embodiments of this application provide a battery cell, a battery, an electrical device, and a method and equipment for manufacturing a battery cell to improve the infiltration effect and infiltration efficiency of the battery cell.

According to a first aspect, a battery cell is disclosed, including: a shell, where the shell includes an accommodation cavity and a first wall, and an injection port is created on the first wall; an electrode assembly, accommodated in the accommodation cavity; and a flow guide, disposed between the first wall and the electrode assembly. The flow guide includes a liquid collection tank. An opening of the liquid collection tank is oriented toward the first wall. A through-hole is created on a bottom wall of the liquid collection tank. The liquid collection tank is configured to collect an electrolyte solution injected through the injection port. The electrolyte solution in the liquid collection tank flows to the electrode assembly through the through-hole.

Therefore, in the battery cell according to an embodiment of this application, the electrolyte solution injected into the battery cell through the injection port is collected by the liquid collection tank of the flow guide. Through the through-hole in the liquid collection tank, the electrolyte solution flows to a region in which the electrode assembly is located. In this way, although the injection port is located at just a specified position on the first wall, the injection positions of the electrolyte solution can be redistributed by the liquid collection tank and the through-hole. In other words, by adjusting the position of the liquid collection tank and the position of the through-hole based on the electrolyte infiltration requirement of the electrode assembly inside the battery cell, the electrolyte solution can be caused to flow out in a desired direction, thereby achieving better effect and higher efficiency of infiltrating the electrode assembly. For example, when the battery cell includes a single electrode assembly, by adjusting the positions of the liquid collection tank and the through-hole, the electrolyte solution can be caused to flow from such specific positions to a specified position of the electrode assembly, so as to achieve optimal effect and efficiency of infiltration. For another example, when the battery cell includes a plurality of electrode assemblies, if the electrolyte solution can flow to positions between the plurality of electrode assemblies, the infiltration for the plurality of electrode assemblies is ensured to be uniform and the infiltration effect is ensured to be good. By setting appropriate positions of the liquid collection tank and the through-hole, the battery cell in this embodiment of this application enables the electrolyte solution to flow in the desired direction, without a need to limit the position of the injection port. The electrolyte solution can be caused to flow to the positions between the plurality of electrode assemblies to achieve a good infiltration effect, improve the infiltration efficiency, and also improve the processing efficiency and electrochemical performance of the battery cell.

In some embodiments, an orthographic projection of the injection port toward the flow guide is located on the bottom wall of the liquid collection tank. When the electrolyte solution is injected into the battery cell through the injection port, the electrolyte solution flows to the liquid collection tank of the flow guide under the action of gravity. In order to enable the liquid collection tank to maximally collect the injected electrolyte solution, the injection port may correspond to the bottom wall of the liquid collection tank, so as to maximally prevent the electrolyte solution from flowing in other directions.

In some embodiments, the bottom wall of the liquid collection tank tilts against a first flat face so that the electrolyte solution in the liquid collection tank converges toward the through-hole, and the first flat face is perpendicular to an axis of the injection port. The bottom wall of the liquid collection tank is arranged to be tilting, so that the electrolyte solution in the liquid collection tank converges toward the through-hole. On the one hand, this can speed up the flow of the electrolyte solution to the electrode assembly. On the other hand, this can avoid accumulation of the electrolyte solution in other positions than the through-hole in the liquid collection tank, and avoid the waste of the electrolyte solution that remains in the liquid collection tank.

In some embodiments, a tilt angle of the bottom wall of the liquid collection tank against the first flat face is greater than 0° and less than 1°. The tilt angle may be set according to the thickness of the flow guide. If the thickness of the flow guide is relatively large, the tilt angle may be set to a relatively large value. Conversely, if the thickness of the flow guide is relatively small, the tilt angle is relatively small. In view of the limited internal space of the battery cell, in order to increase the energy density of the battery cell, the thickness of the flow guide is usually relatively small. Therefore, the tilt angle is usually set to be less than or equal to 0.25° to reduce the footprint of the flow guide.

In some embodiments, the battery cell includes two electrode assemblies arranged along a first direction. The through-hole corresponds to a position between the two electrode assemblies so that the electrolyte solution in the liquid collection tank flows between the two electrode assemblies through the through-hole. In this way, the electrolyte solution between the two electrode assemblies can infiltrate both electrode assemblies concurrently, speed up the infiltration, and improve the infiltration efficiency. The first direction is perpendicular to an axial direction of the injection port.

In some embodiments, the two electrode assemblies include a first electrode assembly and a second electrode assembly. A first end face of the first electrode assembly is oriented toward the second electrode assembly. The first electrode assembly includes a first electrode plate and a second electrode plate. The first electrode plate and the second electrode plate are wound around a winding axis. The winding axis is parallel to the first direction. The first end face is perpendicular to the winding axis. Alternatively, the first electrode assembly includes a plurality of first electrode plates and a plurality of second electrode plates. The plurality of first electrode plates and the plurality of second electrode plates are stacked alternately along a second direction. The second direction is perpendicular to the first direction, and the first end face is perpendicular to the first direction. Alternatively, the first electrode assembly includes a first electrode plate and a plurality of second electrode plates. The first electrode plate includes a plurality of stacked sections and a plurality of bent sections. Each bent section is configured to connect two adjacent stacked sections. The plurality of second electrode plates and the plurality of stacked sections are stacked alternately along a second direction. The second direction is perpendicular to the first direction, and the first end face is perpendicular to the first direction.

In contrast to other arrangements, in a case that the first end face of the first electrode assembly is arranged in the above manner, when the electrolyte solution contacts the first end face, the electrolyte solution can quickly infiltrate all electrode plate layers of the first electrode assembly through the first end face, implement uniform infiltration for different layers of the first electrode assembly and for the second electrode assembly, and in turn, improve the infiltration efficiency for the first electrode assembly.

In some embodiments, the battery cell is cuboidal, and the first direction is a length direction of the battery cell. By disposing the two electrode assemblies along the length direction of the battery cell, the dimension of the battery cell in the length direction can be increased. In this way, when such battery cells are assembled to form a battery, the internal space of the battery is utilized more efficiently, that is, the space utilization rate of the battery is improved, and in turn, the energy density of the battery is increased.

In some embodiments, the two electrode assemblies are electrically insulated from each other. In this way, the first electrode assembly and the second electrode assembly do not need to transmit the current of each other, thereby shortening the conductive path of the first electrode assembly and the conductive path of the second electrode assembly, reducing the internal resistance, reducing heat production, increasing the power of the battery cell, and improving the charging and discharging performance of the battery cell.

In some embodiments, among the two electrode assemblies, tabs of a same electrode assembly are disposed on a same end face, and a tab of one electrode assembly and a tab of the other electrode assembly are oriented in opposite directions and both oriented outward from the battery cell. Of the same electrode assembly, the tabs are disposed on the same end face of the electrode assembly, thereby not only facilitating processing, but also facilitating connection between a tab and an electrode terminal. Of different electrode assemblies, the tab of one electrode assembly and the tab of the other electrode assembly are both oriented outward from the battery cell and oriented in opposite directions, thereby avoiding mutual interference between the tabs of different electrode assemblies, and facilitating electrical connection between each electrode assembly and the corresponding electrode terminal.

In some embodiments, the battery cell further includes an insulator. The insulator is disposed on an outer surface of the electrode assembly. The insulator is configured to isolate the electrode assembly from the shell. The flow guide is fixed to the insulator.

The relative fixation between the flow guide and the electrode assembly makes the through-hole correspond to an optimal electrolyte injection position on the electrode assembly and be relatively fixed. For example, the through-hole corresponds to a position between the two electrode assemblies. In this way, the flow guide and electrode assembly fixed to each other are disposed together in the shell, thereby avoiding misalignment between the flow guide and the electrode assembly during mounting into the shell, and in turn, avoiding a problem that the through-hole is unable to correspond to the optimal electrolyte injection position on the electrode assembly.

In some embodiments, the shell includes a housing and two cover plates. The housing is a hollow structure with openings at both ends of the housing, and the two ends are opposite to each other. The first wall is any one wall of the housing. The two cover plates are configured to fit and cover the openings at the two ends of the housing respectively.

The housing with openings at both ends makes it convenient to put the electrode assembly into the housing. Especially, when the battery cell includes a plurality of electrode assemblies, different electrode assemblies can enter the hollow part of the housing through different openings, so as to speed up mounting.

In some embodiments, the first wall is a smallest-area wall of the housing. To improve the heat dissipation efficiency of the battery cell, the largest-area wall of the housing is usually set to correspond to the largest-area surface of the electrode assembly. Therefore, the first wall is usually not set to be the largest-area wall of the housing. On the one hand, this avoids the adverse effect caused by the injection port on the first wall to heat dissipation. On the other hand, the deformation amount of the largest-area wall is usually relatively large. If the injection port is created on the largest-area wall, an adverse effect will be caused to the sealing effect of a sealing assembly configured to seal the injection port. The deformation of the largest-area wall leads to deformation of the sealing assembly, and in turn, leads to failure of sealing and impairs the safety and performance of the battery cell.

In some embodiments, a pressure relief mechanism is disposed on the first wall. The pressure relief mechanism is configured to be actuated when an internal pressure or temperature of the battery cell reaches a threshold, so as to release the internal pressure of the battery cell. In this way, the pressure of the battery cell is relieved under a circumstance of a controllable pressure or temperature to avoid potential severer accidents.

According to a second aspect, a battery is provided, including a plurality of battery cells, and the battery cells are the battery cell according to the first aspect.

According to a third aspect, an electrical device is provided, including the battery cell according to the first aspect.

In some embodiments, the electrical device is a vehicle, watercraft, or spacecraft.

According to a fourth aspect, a method for manufacturing a battery cell is provided, including: providing a shell, where the shell includes an accommodation cavity, the shell includes a first wall, and an injection port is created on the first wall; providing an electrode assembly; providing a flow guide, where the flow guide includes a liquid collection tank; and letting the electrode assembly and the flow guide be accommodated in the accommodation cavity, and disposing the flow guide between the first wall and the electrode assembly. An opening of the liquid collection tank is oriented toward the first wall. A through-hole is created on a bottom wall of the liquid collection tank. The liquid collection tank is configured to collect an electrolyte solution injected through the injection port, and the electrolyte solution in the liquid collection tank flows to the electrode assembly through the through-hole.

According to a fifth aspect, a piece of equipment for manufacturing a battery cell is provided, and the equipment includes modules that perform the method according to the fourth aspect.

### BRIEF DESCRIPTION OF DRAWINGS

FIG. 1 is a schematic structural diagram of a vehicle according to an embodiment of this application;
FIG. 2 is a schematic exploded view of a battery according to an embodiment of this application;
FIG. 3 is a schematic structural diagram of a battery cell according to an embodiment of this application;
FIG. 4 is a schematic exploded view of a battery cell according to an embodiment of this application;
FIG. 5 to FIG. 7 are cross-sectional schematic views of a first electrode assembly according to an embodiment of this application;
FIG. 8 is a schematic structural diagram of a flow guide according to an embodiment of this application;
FIG. 9 is a schematic top view of a flow guide according to an embodiment of this application;
FIG. 10 is a cross-sectional schematic view of a flow guide according to an embodiment of this application;
FIG. 11 is a schematic exploded view of another battery cell according to an embodiment of this application;
FIG. 12 is a schematic structural diagram of an insulation structure according to an embodiment of this application;
FIG. 13 is a schematic top view of an insulation structure according to an embodiment of this application;
FIG. 14 is a cross-sectional schematic view of an insulation structure according to an embodiment of this application;
FIG. 15 is another cross-sectional schematic view of an insulation structure according to an embodiment of this application;
FIG. 16 is a schematic flowchart of a method for manufacturing a battery cell according to an embodiment of this application; and
FIG. 17 is a schematic block diagram of equipment for manufacturing a battery cell according to an embodiment of this application.

The drawings are not drawn to scale.

### DETAILED DESCRIPTION OF EMBODIMENTS

The following gives a more detailed description of implementations of this application with reference to drawings and embodiments. The detailed description of the following embodiments and drawings are intended to describe the principles of this application illustratively, but not to limit the scope of this application. Therefore, this application is not limited to the described embodiments.

In the description of this application, unless otherwise specified, "a plurality of" means at least two in number; the terms such as "up", "down", "left", "right", "in", and "out" indicating a direction or a position relationship are merely intended for ease or brevity of description of this application, but do not indicate or imply that the mentioned device or component is necessarily located in the specified direction or constructed or operated in the specified direction. Therefore, such terms are not to be understood as a limitation on this application. In addition, the terms "first", "second", "third", and so on are merely used for descriptive purposes, but not construed as indicating or implying relative importance. "Perpendicular" does not means exact perpendicularity, but means perpendicularity falling within an error tolerance range. "Parallel" does not mean exact parallelism, but means parallelism falling within an error tolerance range.

The directional terms appearing in the following description indicate the directions shown in the drawings, but are not intended to limit specific structures in this application. In the description of this application, unless otherwise expressly specified, the terms "mount", "concatenate", and "connect" are understood in a broad sense. For example, a "connection" may be a fixed connection, a detachable connection, or an integrated connection, and may be a direct connection or an indirect connection implemented through an intermediary. A person of ordinary skill in the art can understand the specific meanings of the terms in this application according to specific situations.

In embodiments of this application, the same reference numeral denotes the same component. For brevity, detailed descriptions of the same component are omitted in a different embodiment. Understandably, dimensions such as thickness, length, and width of various components in the embodiments of this application shown in the drawings, and dimensions such as overall thickness, length, and width of an integrated device are merely illustrative descriptions, but do not constitute any limitation on this application.

In this application, a battery cell may include a lithium-ion secondary battery, a lithium-ion primary battery, a lithium-sulfur battery, a sodium-lithium-ion battery, a sodium-ion battery, a magnesium-ion battery, or the like, without being limited in embodiments of this application. The battery cell may be in various shapes such as cylindrical, flat, cuboidal or other shapes. The embodiments of this application do not limit the shape of the battery cell. In terms of the packaging form, the battery cell is typically classed into three types: cylindrical battery cell, prismatic battery cell, and pouch-type battery cell. The type of the battery cell is not limited herein.

The battery mentioned in embodiments of this application means a unitary physical module that includes one or more battery cells to provide a higher voltage and a higher capacity. For example, the battery mentioned in this application may include a battery module, a battery pack, or the like. A battery typically includes a box configured to package one or more battery cells. The box prevents liquid or other foreign matters from affecting the charging or discharging of the battery cells.

A battery cell includes an electrode assembly and an electrolyte solution. The electrode assembly includes a positive electrode plate, a negative electrode plate, and a separator. The battery cell works primarily by shuttling metal ions between the positive electrode plate and the negative electrode plate. The positive electrode plate includes a positive current collector and a positive active material layer. A surface of the positive current collector is coated with the positive active material layer. Of the positive current collector, a part uncoated with the positive active material layer protrudes from a part coated with the positive active material layer. The part, uncoated with the positive active material layer, of the positive current collector, serves as a positive tab. Using a lithium-ion battery as an example, the positive current collector may be made of aluminum, and a positive active material may be lithium cobalt oxide, lithium iron phosphate, ternary lithium, lithium manganese oxide, or the like. The negative electrode plate includes a negative current collector and a negative active material layer. A surface of the negative current collector is coated with the negative active material layer. Of the negative current collector, a part uncoated with the negative active material layer protrudes from a part coated with the negative active material layer, and the part uncoated with the negative active material layer serves as a negative tab. The negative current collector may be made of copper, and a negative active material may be carbon, silicon, or the like. In order to ensure passage of a large current without fusing off, the number of positive tabs is plural, and the plurality of positive tabs are stacked together; and the number of negative tabs is plural, and the plurality of negative tabs are stacked together. The separator may be made of a material such as polypropylene (polypropylene, PP) or polyethylene (polyethylene, PE). In addition, the electrode assembly may be of a jelly-roll type structure or a stacked type structure, without being limited herein.

An injection port is usually created on a shell of the battery cell. Through the injection port, an electrolyte solution can be injected into the battery cell. To facilitate processing, the injection port is usually arranged together with another component on the same wall of the battery cell. For example, the injection port is usually arranged together with electrode terminals or a pressure relief mechanism of the battery cell on the same wall. To avoid other components and prevent interference with other components, the location of the injection port is much limited. Therefore, the injection port of the battery cell usually can be located at just a specified position. The effect of the electrolyte solution infiltrating an electrode assembly inside the battery cell directly affects the electrochemical performance of the battery cell. Especially when the battery cell includes a plurality of electrode assemblies, the electrolyte solution injected through the injection port at a fixed position on the shell is usually unable to meet the requirements on the effect of infiltrating all electrode assemblies inside the battery cell, and is hardly able to achieve uniform infiltration for the plurality of electrode assemblies. This impairs the infiltration efficiency and infiltration effect of the electrolyte solution in the battery cell, and in turn, impairs the processing efficiency and electrochemical performance of the battery cell.

Therefore, an embodiment of this application provides a battery cell. An injection port is created on a first wall of the shell of the battery cell. A flow guide is disposed between the first wall and the electrode assembly. A liquid collection tank with an opening oriented toward the first wall is provided on a surface of the flow guide, the surface being oriented toward the first wall. A through-hole is created on a bottom wall of the liquid collection tank. The electrolyte solution injected into the battery cell through the injection port is collected by the liquid collection tank. The electrolyte solution in the liquid collection tank flows to the electrode assembly through the through-hole. In this way, although the injection port is located at just a specified position on the first wall, the injection positions of the electrolyte solution can be redistributed by the liquid collection tank and the through-hole. In other words, by adjusting the position of the liquid collection tank and the position of the through-hole based on the electrolyte infiltration requirement of the electrode assembly inside the battery cell, the electrolyte solution can be caused to flow out in a desired direction, thereby achieving better effect and higher efficiency of infiltrating the electrode assembly. For example, when the battery cell includes two electrode assemblies, if the electrolyte solution can flow to positions between the two electrode assemblies, the infiltration for the two electrode assemblies is ensured to be uniform, and the infiltration effect is ensured to be good. By setting appropriate positions of the liquid collection tank and the through-hole, the battery cell in this embodiment of this application enables the electrolyte solution to flow in the desired direction, without a need to limit the position of the injection port. The electrolyte solution can be caused to flow to the positions between the two electrode assemblies to achieve a good infiltration effect, improve the infiltration efficiency, and also improve the processing efficiency and electrochemical performance of the battery cell.

The technical solutions described in this embodiment of this application are applicable to various electrical devices that use a battery.

The electrical device may be a vehicle, a mobile phone, a portable device, a notebook computer, a ship, a spacecraft, an electric toy, a power tool, or the like. The vehicle may be an oil-fueled vehicle, a natural gas vehicle, or a new energy vehicle. The new energy vehicle may be a battery electric vehicle, a hybrid electric vehicle, a range-extended electric vehicle, or the like. The spacecraft includes an airplane, a rocket, a space shuttle, a spaceship, and the like. The electric toy includes a fixed or mobile electric toy, such as a game console, an electric car toy, an electric ship toy, an electric airplane toy, and the like. The power tool includes an electrical metal cutting tool, an electrical grinding tool, an electrical assembling tool, and a power tool for use in railways. Examples of the power tool are an electrical drill, an electrical grinder, an electrical wrench, an electrical screwdriver, an electrical hammer, an electrical impact drill, a concrete vibrator, an electrical planer, and the like. The electrical device is not particularly limited in this embodiment of this application.

For ease of description in the following embodiments, a vehicle is used as an example of the electrical device.

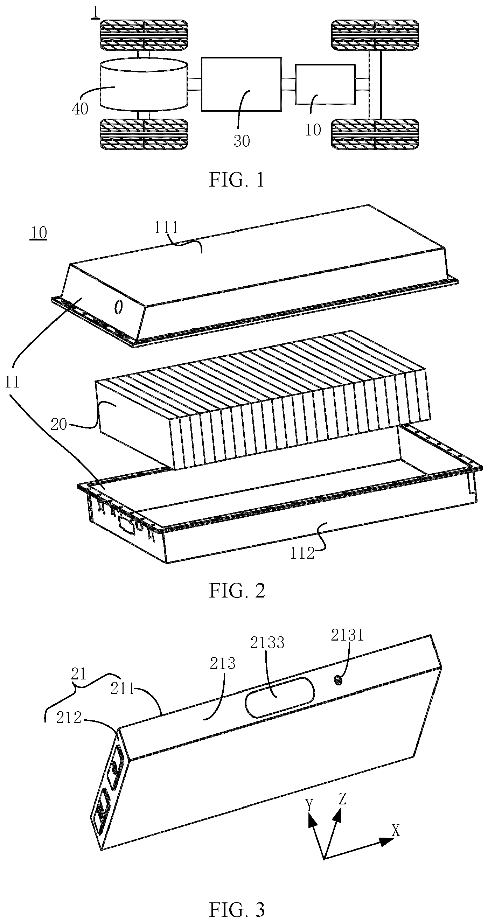

For example, as shown in FIG. 1, which is a schematic structural diagram of a vehicle 1 according to an embodiment of this application, the vehicle 1 may be an oil-fueled vehicle, a natural gas vehicle, or a new energy vehicle. The new energy vehicle may be a battery electric vehicle, a hybrid electric vehicle, a range-extended electric vehicle, or the like. A motor 40, a controller 30, and a battery 10 may be disposed inside the vehicle 1. The controller 30 is configured to control the battery 10 to supply power to the motor 40. For example, the battery 10 may be disposed at the bottom, front, or rear of the vehicle 1. The battery 10 may be configured to supply power to the vehicle 1. For example, the battery 10 may serve as an operating power supply of the vehicle 1 to power a circuit system of the vehicle 1. For example, the battery may be configured to meet operating power usage requirements of the vehicle 1 that is being started or navigated or running. In another embodiment of this application, the battery 10 serves not only as an operating power supply of the vehicle 1, but may also serve as a driving power supply of the vehicle 1 to provide driving power for the vehicle 1 in place of or partly in place of fuel oil or natural gas.

To meet different power usage requirements, the battery may include a plurality of battery cells. The plurality of battery cells may be connected in series, parallel, or series-and-parallel pattern. The series-and-parallel pattern means a combination of series connection and parallel connection. The battery may also be referred to as a battery pack. For example, the plurality of battery cells may be connected in series, parallel, or series-and-parallel pattern to form a battery module, and then a plurality of battery modules may be connected in series, parallel, or series-and-parallel pattern to form the battery. In other words, the plurality of battery cells may directly form the battery, or form the battery modules that are then used to form the battery.

For example, FIG. 2 is a schematic structural diagram of a battery 10 according to an embodiment of this application. The battery 10 may include a plurality of battery cells 20. The battery 10 may further include a box 11. The interior of the box 11 is a hollow structure. A plurality of battery cells 20 are accommodated in the box 11. FIG. 2 shows a possible implementation of the box 11 according to this embodiment of this application. As shown in FIG. 2, the box 11 may include two parts, herein referred to as a first part 111 and a second part 112 respectively. The first part 111 and the second part 112 are snap-fitted together. The shapes of the first part 111 and the second part 112 may depend on the shape of the plurality of battery cells 20 combined. An opening is created on at least one of the first part 111 or the second part 112. For example, as shown in FIG. 2, the first part 111 and the second part 112 each may be a hollow cuboid, and each may include one opened surface. The opening of the first part 111 is opposite to the opening of the second part 112. The first part 111 and the second part 112 are snap-fitted to each other to form a box 11 that includes a closed cavity.

For another example, different from what is shown in FIG. 2, of the first part 111 and the second part 112, only one is a hollow cuboid with an opening, and the other assumes a plate shape to cover the opening. For example, the second part 112 is a hollow cuboid with one opened surface, and the first part 111 assumes a plate shape. In this case, the first part 111 fits and covers the opening of the second part 112 to form a box 11 with a closed cavity. The cavity may be configured to accommodate a plurality of battery cells 20. The plurality of battery cells 20 are combined and connected in parallel, series, or series-and-parallel pattern, and then placed into the box 11 that is formed by snap-fitting the first part 111 and the second part 112.

In some embodiments, the battery 10 may further include other structures, details of which are omitted here. For example, the battery 10 may further include a busbar component. The busbar component is configured to implement electrical connection between the plurality of battery cells 20, such as parallel connection, series connection, or series-parallel connection. Specifically, the busbar component may implement the electrical connection between the battery cells 20 by connecting electrode terminals of the battery cells 20. Further, the busbar component may be fixed to the electrode terminals of the battery cells 20 by welding. Electrical energy of the plurality of battery cells 20 may be further led out by a conductive mechanism running through the box 11.

Depending on the required power, the number of battery cells 20 in a battery 10 may be set to any value. A plurality of battery cells 20 may be connected in series, parallel, or series-and-parallel pattern to achieve a relatively high capacity or power. Each battery 10 may include a relatively large number of battery cells 20. Therefore, in order to facilitate mounting, the battery cells 20 may be arranged in groups. Each group of battery cells 20 forms a battery module. The number of battery cells 20 included in the battery module is not limited, and may be set as required.

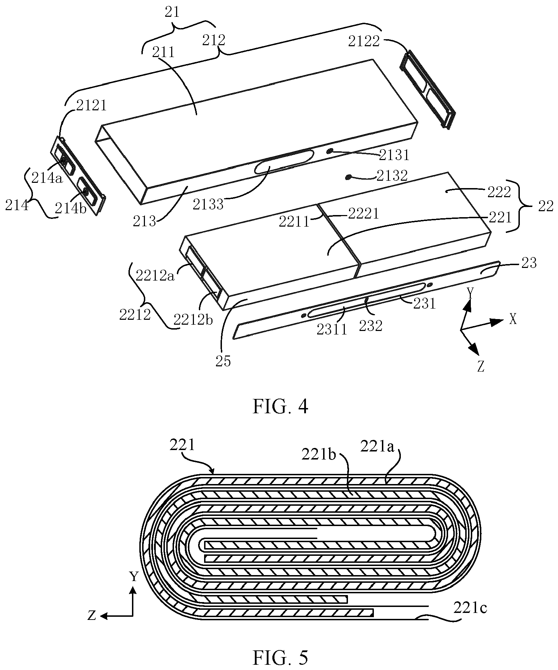

FIG. 3 is a schematic diagram of a battery cell 20 according to an embodiment of this application, and FIG. 4 is a possible schematic exploded view of a battery cell 20 according to an embodiment of this application. For example, the battery cell 20 shown in FIG. 4 may be a schematic exploded view of the battery cell 20 shown in FIG. 3. As shown in FIG. 3 and FIG. 4, the battery cell 20 according to an embodiment of this application includes: a shell 21, where the shell includes an accommodation cavity, and the shell 21 includes a first wall 213, and an injection port 2131 is created on the first wall 213; an electrode assembly 22, accommodated in the accommodation cavity; and a flow guide 23, disposed between the first wall 213 and the electrode assembly 22. The flow guide 23 includes a liquid collection tank 231. An opening of the liquid collection tank 231 is oriented toward the first wall 213. Athrough-hole 232 is created on a bottom wall 2311 of the liquid collection tank 231. The liquid collection tank 231 is configured to collect an electrolyte solution injected through the injection port 2131. The electrolyte solution in the liquid collection tank 231 flows to the electrode assembly 22 through the through-hole 232.

Understandably, the battery cell 20 in this embodiment of this application includes a shell 21, and the shell 21 includes an accommodation cavity inside, so that the battery cell 20 assumes a hollow polyhedral structure. Specifically, the shell of the battery cell 20 may include a plurality of walls. The first wall 213 is any one of the walls. The first wall 213 includes an injection port 2131. An electrolyte solution is injected into the battery cell 20 through the injection port 2131.

At least one electrode assembly 22 can be accommodated inside the battery cell 20 in this embodiment of this application. A flow guide 23 is disposed between the electrode assembly 22 and the first wall 213. The flow guide 23 includes a liquid collection tank 231 with an opening oriented toward the first wall 213. In this way, when the electrolyte solution is injected through the injection port 2131, the liquid collection tank 231 can collect the electrolyte solution. The collected electrolyte solution can flow to the electrode assembly 22 through the through-hole 232 on the liquid collection tank 231.

In this embodiment of this application, that the electrolyte solution flows to the electrode assembly 22 through the through-hole 232 may mean that the electrolyte solution flows, through the through-hole 232, to any position in the region in which at least one electrode assembly 22 is located. For example, the electrolyte solution may flow to positions between a plurality of electrode assemblies 22 to infiltrate the plurality of electrode assemblies 22; or, the electrolyte solution may flow to any end face of any electrode assembly 22, so as to effectively infiltrate the electrode assembly 22 through the end face. This embodiment of this application is not limited such examples.

In the battery cell 20 in this embodiment of this application, the electrolyte solution injected into the battery cell 20 through the injection port 2131 is collected by the liquid collection tank 231 of the flow guide 23. Through the through-hole 232 in the liquid collection tank 231, the electrolyte solution flows to the region in which the electrode assembly is located. In this way, although the injection port 2131 is located at just a specified position on the first wall 213, the injection positions of the electrolyte solution can be redistributed by the liquid collection tank 231 and the through-hole 232. In other words, by adjusting the position of the liquid collection tank 231 and the position of the through-hole 232 based on the electrolyte infiltration requirement of the electrode assembly 22 inside the battery cell 20, the electrolyte solution can be caused to flow out in a desired direction, thereby achieving better effect and higher efficiency of infiltrating the electrode assembly 22. For example, when the battery cell 20 includes a single electrode assembly 22, by adjusting the positions of the liquid collection tank 231 and the through-hole 232, the electrolyte solution can be caused to flow from such specific positions to a specified position of the electrode assembly 22, so as to achieve optimal effect and efficiency of infiltration. For another example, when the battery cell 20 includes a plurality of electrode assemblies 22, if the electrolyte solution can flow to positions between the plurality of electrode assemblies 22, the infiltration for the plurality of electrode assemblies is ensured to be uniform and the infiltration effect is ensured to be good. By setting appropriate positions of the liquid collection tank 231 and the through-hole 232, the battery cell 20 in this embodiment of this application enables the electrolyte solution to flow in the desired direction, without a need to limit the position of the injection port 2131. The electrolyte solution can be caused to flow to the positions between the plurality of electrode assemblies 22 to achieve a good infiltration effect, improve the infiltration efficiency, and also improve the processing efficiency and electrochemical performance of the battery cell 20.

Understandably, as shown in FIG. 3 and FIG. 4, the shell 21 in this embodiment of this application may assume a polyhedral structure. Specifically, the shell 21 may include a housing 211 and a cover plate 212. The housing 211 may be a hollow structure opened at least at one end. The shape of the cover plate 212 may be adapted to the shape of the housing 211. The cover plate 212 is configured to fit and cover the opening of the housing 211 so that the shell 21 isolates the internal environment of the battery cell 20 from the external environment. If the housing 211 is a hollow structure opened at one end, one cover plate 212 may be disposed. If the housing 211 is a hollow structure opened at two opposite ends, two cover plates 212 may be disposed. The two cover plates 212 fit and cover the openings at the two ends of the housing 211 respectively.

The housing 211 in this embodiment of this application may be made of a variety of materials such as copper, iron, aluminum, steel, or aluminum alloy. The cover plate 212 may be made of a variety of materials such as copper, iron, aluminum, steel, or aluminum alloy. The material of the cover plate 212 may be identical to or different from the material of the housing 211.

The shell 21 in this embodiment of this application may be in various shapes such as a cylinder or cuboid. The shape of the housing 211 and the shape of the cover plate 212 may be adapted to each other. For example, as shown in FIG. 3 and FIG. 4, the housing 211 is a cuboidal structure, and the cover plate 212 is a rectangular plate structure adapted to the housing 211.

For ease of description, this application is described by using an example in which two cover plates 212 are disposed and the shell 21 is cuboidal. Specifically, as shown in FIG. 3 and FIG. 4, the shell 21 includes a housing 211 and two cover plates 212. The housing 211 is a hollow structure with openings at both ends of the housing 211, and the two ends are opposite to each other. The two cover plates 212 are configured to fit and cover the openings at the two ends of the housing 211 respectively. The two cover plates 212 include a first cover plate 2121 and a second cover plate 2122. The first cover plate 2121 and the second cover plate 2122 are located at two opposite ends respectively to fit and cover the two ends of the housing 211. The housing 211 with openings at both ends makes it convenient to put the electrode assembly 22 into the housing. Especially, when the battery cell 20 includes a plurality of electrode assemblies 22, different electrode assemblies 22 can enter the hollow part of the housing 211 through different openings, so as to speed up mounting.

In the battery cell 20, according to actual usage requirements, the number of electrode assemblies 22 in the housing 211 may be 1 or more. For example, in FIG. 3 and FIG. 4, the battery cell 20 includes two electrode assemblies 22 arranged along the first direction X. The two electrode assemblies 22 include a first electrode assembly 221 and a second electrode assembly 222, but this embodiment of this application is not limited to the examples.

The electrode assembly 22 is a component that reacts electrochemically in the battery cell 20. The electrode assembly 22 may be cylindrical, cuboidal, or the like. If the electrode assembly 22 is cylindrical, the housing 211 may be cylindrical accordingly. If the electrode assembly 22 is cuboidal, the housing 211 may be cuboidal accordingly.

For any electrode assembly 22, the electrode assembly 22 may include a tab and a main portion. For example, using the first electrode assembly 221 in FIG. 3 and FIG. 4 as an example, the first electrode assembly 221 may be any one of the plurality of electrode assemblies 20 included in the battery cell 20. The tab 2212 of the first electrode assembly 221 may include a positive tab 2212a and a negative tab 2212b. The positive tab 2212a may be a stacked part, uncoated with a positive active material layer, on a positive electrode plate; and the negative tab 2212b may be a stacked part, uncoated with a negative active material layer, on a negative electrode plate. The main portion of the first electrode assembly 221 may be formed by stacking or winding a part coated with the positive active material layer on the positive electrode plate and a part coated with the negative active material layer on the negative electrode plate.

Understandably, for any one electrode assembly 22, the tabs of the electrode assembly 22 may be located on the same end face or different end faces. When the battery cell 20 includes a plurality of electrode assemblies 22, the tabs of the plurality of electrode assemblies 20 may also be located on the same corresponding end face, or on non-corresponding end faces. The location of the tabs is not limited in this embodiment of this application.

Further, electrode terminals are disposed on the shell 21 in this embodiment of this application. The electrode terminals are configured to be electrically connected to the electrode assembly 22 to output electrical energy of the battery cell 20. In some embodiments, the electrode terminals may be disposed based on the location of the tabs of the electrode assembly 22. For example, corresponding to the tabs of the electrode assembly 22, at least one group of electrode terminals may be included in the battery cell 20. Each group of electrode terminals includes a positive electrode terminal and a negative electrode terminal. The positive electrode terminal is configured to be electrically connected to the positive tab, and the negative electrode terminal is configured to be electrically connected to the negative tab. The positive electrode terminal may be connected to the positive tab directly or indirectly, and the negative electrode terminal may be connected to the negative tab directly or indirectly. For example, the positive electrode terminal is electrically connected to the positive tab by one connecting member, and the negative electrode terminal is electrically connected to the negative tab by another connecting member.

In addition, corresponding to the arrangement of the tabs of the electrode assembly 22, the same group of electrode terminals may be disposed on the same wall or different walls of the shell 21, and different groups of electrode terminals may also be disposed on the same wall or different walls of the shell 21.

For ease of description, this application is described by using an example in which the battery cell 20 includes a plurality of groups of electrode terminals. Specifically, for the first electrode assembly 221 and the second electrode assembly 222, among the two electrode assemblies 22, the tabs of the same electrode assembly 22 are disposed on the same end face, but a tab of one electrode assembly 22 and a tab of the other electrode assembly are oriented in opposite directions and both oriented outward from the battery cell 20. The tabs are disposed on the same end face of the electrode assembly 22, thereby not only facilitating processing, but also facilitating connection between a tab and an electrode terminal. The tabs of the two electrode assemblies 22 are all oriented outward from the battery cell 20, which means that the two electrode assemblies 22 are not disposed on two opposite end faces of the two electrode assemblies 22, for example, as shown in FIG. 3 and FIG. 4, the first end face 2211 of the first electrode assembly 221 is opposite to the second end face 2221 of the second electrode assembly 222, and therefore, no tab is disposed on the first end face 2211 or the second end face 2221. In addition, a tab of one electrode assembly 22 and a tab of the other electrode assembly are oriented in opposite directions, for example, as shown in FIG. 3 and FIG. 4, the tabs 2212 of the first electrode assembly 221 are oriented in a negative direction of the first direction X, and the tabs of the second electrode assembly 222 are oriented in a positive direction of the first direction X. Such arrangement of two electrode assemblies 22 facilitates electrical connection between each electrode assembly 22 and the corresponding electrode terminal.

Correspondingly, the battery cell 20 includes two groups of electrode terminals. The two groups of electrode terminals are disposed on two opposite cover plates 212 respectively, thereby increasing the distance between the two groups of electrode terminals and avoiding mutual interference.

For example, as shown in FIG. 3 and FIG. 4, a positive electrode terminal and a negative electrode terminal are disposed on each cover plate 212 of the two cover plates 212. The tabs are disposed on an end face of the electrode assembly 22, the end face being oriented toward the corresponding cover plate 212. Specifically, the tab 2212 included in the first electrode assembly 221 is located on an end face of the first electrode assembly 221, the end face being oriented toward the first cover plate 2121. The first cover plate 2121 includes a group of electrode terminals 214. The positive electrode terminal 214a is configured to be electrically connected to the positive tab 2212a of the first electrode assembly 221, and the negative electrode terminal 214b is configured to be electrically connected to the negative tab 2212a of the first electrode assembly 221. Similarly, the tab included in the second electrode assembly 222 is located on an end face of the second electrode assembly 222, the end face being oriented toward the second cover plate 2122. The second cover plate 2122 includes a group of electrode terminals. The positive electrode terminal of the second cover plate 2122 is configured to be electrically connected to the positive tab of the second electrode assembly 222, and the negative electrode terminal of the second cover plate 2122 is configured to be electrically connected to the negative tab of the second electrode assembly 222, but this embodiment of this application is not limited to such exemplary description.

The two groups of electrode terminals are disposed on the two opposite cover plates 212 respectively, thereby reducing the risk of interference and simplifying the assembling process.

In some embodiments, as shown in FIG. 3 and FIG. 4, the two electrode assemblies 22 are electrically insulated from each other. That is, the first electrode assembly 221 is electrically insulated from the second electrode assembly 222. In this way, the first electrode assembly 221 and the second electrode assembly 222 do not need to transmit the current of each other, thereby shortening the conductive path of the first electrode assembly 221 and the conductive path of the second electrode assembly 222, reducing the internal resistance, reducing heat production, increasing the power of the battery cell 20, and improving the charging and discharging performance of the battery cell 20.

Understandably, the electrode assembly 22 in this embodiment of this application may be a jelly-roll type or a stacked type structure, or may be another type of electrode assembly 22. In addition, when a plurality of electrode assemblies 22 are included in the same battery cell 20, the plurality of electrode assemblies 22 may be the same type or different types of electrode assemblies 22. Specifically, as shown in FIG. 3 and FIG. 4, the two electrode assemblies 22 in this embodiment of this application include a first electrode assembly 221 and a second electrode assembly 222, and the first end face 2211 of the first electrode assembly 221 is oriented toward the second electrode assembly 222. The following uses the first electrode assembly 221 and the first end face 2211 as an example to illustrate possible types of the electrode assembly 22 included in the battery cell 20 in an embodiment of this application.

In some embodiments, the first electrode assembly 221 may be a jelly-roll type structure. Specifically, FIG. 5 is a possible cross-sectional schematic view of the first electrode assembly 221 according to an embodiment of this application. The cross-section is perpendicular to the first direction X. As shown in FIG. 5, the first electrode assembly 221 includes a first electrode plate 221a and a second electrode plate 221c. The first electrode plate 221a and the second electrode plate 221c are wound around a winding axis. The winding axis of the first electrode assembly 221 is parallel to the first direction X. The first end face 2211 is perpendicular to the winding axis. That is, the first end face 2211 is parallel to the cross-section shown in FIG. 5.

As shown in FIG. 5, the first electrode assembly 221 further includes a separator 221c disposed between the first electrode plate 221a and the second electrode plate 221b. The separator 221c is configured to dielectrically isolate the first electrode plate 221a from the second electrode plate 221b. In some embodiments, the first electrode plate 221a, the second electrode plate 221b, and the separator 221c are all ribbon-shaped structures. The first electrode plate 221a, the second electrode plate 221b, and the separator 221c are stacked and wound for at least two coils along the winding axis to form the first electrode assembly 221. The separator 221c may be the separator, and may be made of a material such as polypropylene or polyethylene.

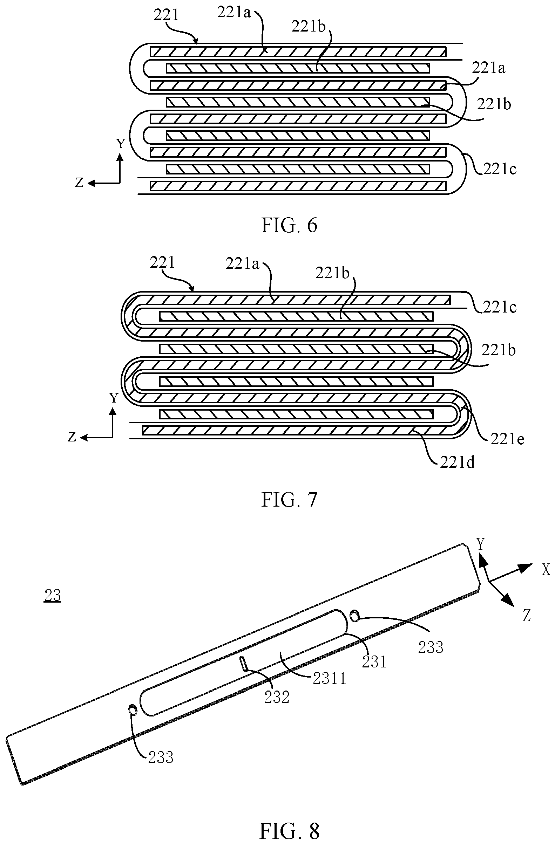

In some embodiments, the first electrode assembly 221 may be a stacked-type structure instead. Specifically, FIG. 6 is another possible cross-sectional schematic view of the first electrode assembly 221 according to an embodiment of this application. The cross-section is perpendicular to the first direction X. As shown in FIG. 6, the first electrode assembly 221 includes a plurality of first electrode plates 221a and a plurality of second electrode plates 221b. The plurality of first electrode plates 221a and the plurality of second electrode plates 221b are alternately stacked along the second direction Y It may be set that the second direction Y is perpendicular to the first direction X, and the first end face 2211 is perpendicular to the first direction X.

As shown in FIG. 6, the first electrode assembly 221 further includes a separator 221c. The separator 221c is configured to dielectrically isolate the first electrode plate 221a from an adjacent second electrode plate 221b.

In some embodiments, the stacked-type first electrode assembly 221 may be stacked in other ways instead. Specifically, FIG. 7 is another possible cross-sectional schematic view of the first electrode assembly 221 according to an embodiment of this application. The cross-section is perpendicular to the first direction X. As shown in FIG. 7, the first electrode assembly 221 includes a first electrode plate 221a and a plurality of second electrode plates 221b. The first electrode plate 221a includes a plurality of stacked sections 221d and a plurality of bent sections 221e. Each bent section 221e is configured to connect two adjacent stacked sections 221d. A plurality of second electrode plates 221b and a plurality of stacked sections 221d are alternately stacked along the second direction Y It may be set that the second direction Y is perpendicular to the first direction X, and the first end face 2211 is perpendicular to the first direction X. Further, the first end face 2211 may be set to be perpendicular to the bent section 221e. That is, the first end face 2211 is perpendicular to the extension direction of each bent section 221e, so as to prevent the first end face 2211 from being an end face that includes a plurality of bent sections 221e, prevent the electrolyte solution from having to pass through the bent sections 221e to infiltrate the first electrode assembly 221, and in turn, improve the infiltration efficiency.

As shown in FIG. 7, the first electrode assembly 221 further includes a separator 221c. The separator 221c is configured to dielectrically isolate the first electrode plate 221a from an adjacent second electrode plate 221b.

Understandably, the first electrode plate and the second electrode plate are two electrode plates of opposite polarities. For example, when the first electrode plate is a positive electrode plate, the second electrode plate is a negative electrode plate. When the first electrode plate is a negative electrode plate, the second electrode plate is a positive electrode plate. FIG. 5 to FIG. 7 show a technical solution in which the first electrode plate 221a is a negative electrode plate and the second electrode plate 221b is a positive electrode plate.

In a case that the first end face 2211 of the first electrode assembly 221 is arranged in the above manner, the end part of the electrode plate is exposed out of the first end face 2211. When the electrolyte solution contacts the first end face 2211, the electrolyte solution can quickly infiltrate all electrode plate layers of the first electrode assembly 221 through the first end face 2211, implement uniform infiltration for different electrode plate layers of the first electrode assembly 221, and in turn, improve the infiltration efficiency for the first electrode assembly 221.

The above arrangement of the first electrode assembly 221 and the first end face 2211 is also applicable to the second electrode assembly 222 and the second end face 2221. The second end face 2221 of the second electrode assembly 222 is oriented toward the first electrode assembly 221. Specifically, the first electrode assembly 221 and the first electrode assembly 222 may be the same type or different types of electrode assemblies 22. For example, the first electrode assembly 221 and the second electrode assembly 222 may both be a jelly-roll structure, or may be the same type of stacked structure, so as to facilitate processing. Moreover, in contrast to other arrangements, in a case that the first end face 2211 and the opposite second end face 2221 are arranged in the above manner, when the electrolyte solution flows between the first end face 2211 and the second end face 2221, the electrolyte solution can quickly infiltrate all electrode plate layers of the first electrode assembly 221 and the second electrode assembly 222 through the first end face 2211 and the second end face 2221 respectively, implement uniform infiltration effect for the first electrode assembly 221 and the second electrode assembly 222, and in turn, improve the infiltration efficiency for the first electrode assembly 221 and the second electrode assembly 222.

For ease of description, the first end face 2211 of the first electrode assembly 221 and the second end face 2221 of the second electrode assembly 222 in this embodiment of this application are arranged in the above manner as an example, so as to achieve the optimal infiltration effect when the electrolyte solution flows between the first end face 2211 and the second end face 2221.

In this embodiment of this application, corresponding to the arrangement of the first end face 2211 and the second end face 2221, the two tabs 2212 of the first electrode assembly 221 may be disposed on opposite surfaces parallel to the first end face 2211, and the two tabs of the second electrode assembly 222 may also be disposed on opposite surfaces parallel to the second end face 2221, so as to facilitate processing.

In some embodiments, the first direction X is the length direction of the battery cell 20. Specifically, as shown in FIG. 3 and FIG. 4, using an example in which the battery cell 20 is cuboidal, by disposing the two electrode assemblies 22 along the length direction of the battery cell 20, the dimension of the battery cell 20 in the length direction can be increased. In this way, when such battery cells 20 are assembled to form a battery 10, the internal space of the battery 10 is utilized more efficiently, that is, the space utilization rate of the battery 10 is improved, and in turn, the energy density of the battery 10 is increased.

In addition, considering the above arrangement and shape of the first electrode assembly 221 and the second electrode assembly 222, correspondingly, the two cover plates 212 may be perpendicular to the first direction X. That is, the first cover plate 2121 and the second cover plate 2122 are the smallest-area walls of the battery cell 20. In this way, the surface of each electrode assembly 22, which is prone to expand due to a high temperature, corresponds to the largest-area wall of the battery cell 20. In other words, the expansion direction at a position most prone to thermal expansion on the electrode assembly 22 is perpendicular to the largest-area wall of the battery cell 20, thereby facilitating the heat dissipation of the battery cell 20 and reducing expansion.

In this embodiment of this application, the first wall 213 is any one wall of the housing 211. As shown in FIG. 3 and FIG. 4, electrode terminals are disposed on both cover plates 212 in this embodiment of this application, and correspond to different electrode assemblies 22 that are electrically insulated from each other. Therefore, if the injection port 2131 is created on any one of the cover plates 212, for example, if the injection port 2131 is created on the first cover plate 2121, the infiltration effect for the second electrode assembly 222 corresponding to the second cover plate 2122 may be impaired. Therefore, the injection port 2131 may be created on the housing 211. That is, the first wall 213 containing the injection port 2131 may be any one wall of the housing 211, so as to improve the infiltration effect for each electrode assembly 22 inside the battery cell 20.

Further, the first wall 213 is not a largest-area wall of the housing 211. For example, the first wall 213 is a smallest-area wall of the housing 211. To improve the heat dissipation efficiency of the battery cell 20, the largest-area wall of the housing 211 is usually set to correspond to the largest-area surface of the electrode assembly 22. Therefore, the first wall 213 is usually not set to be the largest-area wall of the housing 211. On the one hand, this avoids the adverse effect caused by the injection port 2131 on the first wall 213 to heat dissipation. On the other hand, the deformation amount of the largest-area wall is usually relatively large. If the injection port 2131 is created on the largest-area wall, an adverse effect will be caused to the sealing effect of a sealing assembly 2132 configured to seal the injection port 2131. The deformation of the largest-area wall leads to deformation of the sealing assembly 2132, and in turn, leads to failure of sealing and impairs the safety and performance of the battery cell 20.

Understandably, the battery cell 20 in this embodiment of this application may further include a sealing assembly 2132. The sealing assembly 2132 is configured to seal the injection port 2131. The sealing assembly 2131 may be implemented in various ways, and the sealing assembly 2132 may be a non-detachable structure or a detachable structure, which is not limited in this embodiment of this application. For example, the sealing assembly 2132 may be a sealing pin.

In this embodiment of this application, other components may be further disposed on the first wall 213 to facilitate centralized processing and improve processing efficiency. For example, a pressure relief mechanism 2133 is disposed on the first wall 213. The pressure relief mechanism 2133 is configured to be actuated when an internal pressure or temperature of the battery cell reaches a threshold, so as to release the internal pressure of the battery cell.

Understandably, the threshold may be adjusted depending on design requirements. The preset threshold may depend on the material of one or more of the positive electrode plate, the negative electrode plate, the electrolyte solution, or the separator in the battery cell 20. The pressure relief mechanism 2133 may be formed together with the first wall 213 in one piece. For example, the pressure relief mechanism 2133 may be a nick on the first wall 213; or, the pressure relief mechanism 2133 may be an element or component sensitive to pressure or temperature. To be specific, when the internal pressure or temperature of the battery cell 20 reaches the preset threshold, the pressure relief mechanism 2133 is actuated to form a channel for relieving the internal pressure or temperature.

The term "actuated" referred to herein means that the pressure relief mechanism 2133 performs an action to relieve the internal pressure or temperature of the battery cell 20. The action performed by the pressure relief mechanism 2133 may include, but is not limited to rupturing, tearing, or melting at least a part of the pressure relief mechanism 2133, and the like. When the pressure relief mechanism 2133 is actuated, high-temperature and high-pressure substances inside the battery cell 20 are expelled as emissions out of the pressure relief mechanism 2133. In this way, the pressure of the battery cell 20 is relieved under a circumstance of a controllable pressure or temperature to avoid potential severer accidents.

The emissions out of the battery cell 20 mentioned in this application include but are not limited to: electrolytic solution, melted or split positive and negative electrode plates, fragments of the separator, reaction-induced high-temperature and high-pressure gases, flames, and the like.

The pressure relief mechanism 2133 on the battery cell 20 exerts an important effect on the safety of the battery 10. For example, when a short circuit, overcharge, or the like occurs on the battery cell 20, thermal runaway may occur inside the battery cell 20, resulting in a surge in pressure or temperature. In this case, the internal pressure and heat can be released outward by actuating the pressure relief mechanism 2133, thereby preventing explosion and fire of the battery cell 20.

To ensure safety of the battery cell 20, the pressure relief mechanism 2133 is usually disposed at a middle position of the first wall 213, so as to be broken effectively in time to relieve the internal pressure and temperature. Therefore, in order to avoid the pressure relief mechanism 2133 or other components located on the first wall 213, the location of the injection port 2131 on the first wall 213 is much limited, and may be a location other than the optimal electrolyte injection position. For example, for the electrode assembly 22 shown in FIG. 3 and FIG. 4, when the electrolyte solution is injected between the first electrode assembly 221 and the second electrode assembly 222, the infiltration effect for the two electrode assemblies 22 is good. However, in order to avoid the pressure relief mechanism 2133, the injection port 2131 usually needs to be located at an edge position deviated from the middle position. Therefore, the battery cell 20 in this embodiment of this application includes a flow guide 23 to solve such a problem. The flow guide 23 in this embodiment of this application includes a liquid collection tank 231. A through-hole 232 is created on a bottom wall 2311 of the liquid collection tank 231. The locations of the liquid collection tank 231 and the through-hole 232 may be set appropriately to adjust the infiltration effect for the battery cell 20.

For example, referring to FIG. 3 and FIG. 4 as an example, the battery cell 20 includes two electrode assemblies 22 arranged along a first direction X, the through-hole 232 corresponds to a position between the two electrode assemblies 22 so that the electrolyte solution in the liquid collection tank 231 flows between the two electrode assemblies 22 through the through-hole 232. The first direction X is perpendicular to an axial direction of the injection port 2131. Specifically, as described above, if the electrolyte solution flows between the first electrode assembly 221 and the second electrode assembly 222, the infiltration effect is good, but the injection port 2131 may be unable to meet the position requirement. Therefore, by disposing the flow guide 23, the electrolyte solution flows into the interior of the battery cell 20 through the injection port 2131. The electrolyte solution is collected by the liquid collection tank 231, and then the flow direction of the electrolyte solution is adjusted again through the through-hole 232, so that the electrolyte solution can be caused to flow in the desired direction. For example, by creating the through hole 232 at a position between the first electrode assembly 221 and the second electrode assembly 222, the electrolyte solution can be caused to flow between the first electrode assembly 221 and the second electrode assembly 222 through the through-hole 232 to achieve a good infiltration effect, improve the infiltration efficiency, and improve the processing efficiency and electrochemical performance of the battery cell 20.

In the battery cell 20, the flow guide 23 serves a function of insulation to ensure electrical insulation between the electrode assembly 22 and the shell 21.

In this embodiment of this application, the battery cell 20 further includes an insulator 25. The insulator 25 is disposed on an outer surface of the electrode assembly 22. The insulator 25 is configured to isolate the electrode assembly 22 from the shell 21. The flow guide 23 is fixed to the insulator 25.

Specifically, as shown in FIG. 3 and FIG. 4, for any one electrode assembly 22 in the battery cell 20, the insulator 25 may be disposed on all or part of the outer surfaces of the electrode assembly 22. The insulator 25 may be configured to isolate the electrode assembly 22 from the housing 21. Moreover, a plurality of electrode assemblies 22 may share the same insulator or use different insulators 25, which constitutes no limitation on this embodiment of this application. The flow guide 23 and the insulator 25 may adhesively fixed to each other by a binder, so as to implement relative fixation between the flow guide 23 and the electrode assembly 22, and make the through-hole 232 correspond to an optimal electrolyte injection position on the electrode assembly 22. For example, the through-hole 232 corresponds to a position between the two electrode assemblies 22. In this way, the flow guide 23 and electrode assembly 22 fixed to each other are disposed together in the shell 21, thereby avoiding misalignment between the flow guide 23 and the electrode assembly 22 during mounting into the shell 21, and in turn, avoiding a problem that the through-hole 232 is unable to correspond to the optimal electrolyte injection position on the electrode assembly 22.

In this embodiment of this application, as shown in FIG. 3 and FIG. 4, an orthographic projection of the injection port 2131 toward the flow guide 23 is located on the bottom wall 2311 of the liquid collection tank 231. When the electrolyte solution is injected into the battery cell 20 through the injection port 2131, the electrolyte solution flows to the liquid collection tank 231 of the flow guide 23 under the action of gravity. In order to enable the liquid collection tank 231 to maximally collect the injected electrolyte solution, the injection port 2131 may correspond to the bottom wall 2311 of the liquid collection tank 231, so as to maximally prevent the electrolyte solution from flowing in other directions.

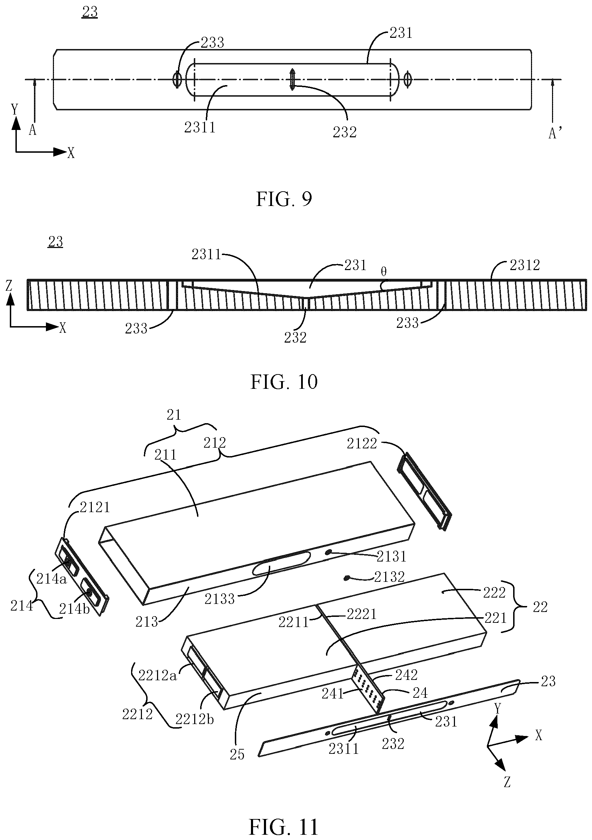

The following describes the flow guide 23 in this embodiment of this application in detail with reference to drawings. FIG. 8 is a schematic structural diagram of a flow guide 23 according to an embodiment of this application; FIG. 9 is a schematic top view of a flow guide 23 according to an embodiment of this application; and FIG. 10 is a cross-sectional schematic view of a flow guide 23 according to an embodiment of this application. The cross-section may be a cross-sectional view along an A-A' line shown in FIG. 9. That is, the cross-section is perpendicular to the second direction Y, perpendicular to the flow guide 23, and parallel to the first direction X.

Understandably, the area and shape of the liquid collection tank 231 of the flow guide 23 in this embodiment of this application may be disposed according to practical applications. For example, as shown in FIG. 8 to FIG. 10, the shape of the liquid collection tank 231 may be set to be a waist-round shape to facilitate processing. In addition, the area of the liquid collection tank 231 in this embodiment of this application may be disposed based on the position of the injection port 2131, the position of the electrode assembly 22, the injection speed, and the like. For example, the liquid collection tank 231 needs to cover the corresponding position of the injection port 2131 to ensure that the electrolyte solution injected through the injection port 2131 can be collected. For another example, the liquid collection tank 231 also needs to cover the optimal injection position required by the electrode assembly 22 so that the through-hole 232 corresponds to the optimal position. For another example, if the electrolyte injection speed is fast, the area of the liquid collection tank 231 needs to be set to be relatively large to prevent the infiltration efficiency from being reduced by an overflow of the electrolyte solution from the liquid collection tank 231.

In some embodiments, as shown in FIG. 8 to FIG. 10, the bottom wall 2311 of the liquid collection tank 231 tilts against a first flat face 2312 so that the electrolyte solution in the liquid collection tank 231 converges toward the through-hole 232. The first flat face 2312 is perpendicular to an axis of the injection port 2131. The first flat face 2312 is perpendicular to the third direction Z, and parallel to the first direction X. The third direction Z is a thickness direction of the flow guide 23, and the third direction Z is perpendicular to the first direction X. The bottom wall 2311 of the liquid collection tank 231 is arranged to be tilting, so that the electrolyte solution in the liquid collection tank 231 converges toward the through-hole 232. On the one hand, this can speed up the flow of the electrolyte solution to the electrode assembly 22. On the other hand, this can avoid accumulation of the electrolyte solution in other positions than the through-hole 232 in the liquid collection tank 231, and avoid the waste of the electrolyte solution that remains in the liquid collection tank 231.

Understandably, a tilt angle θ of the bottom wall 2311 of the liquid collection tank 231 in this embodiment of this application against the first flat face 2312 may be set according to practical applications. In some embodiments, the tilt angle θ of the bottom wall 2311 of the liquid collection tank 231 against the first flat face 2312 is greater than 0° and less than 1°. For example, the tilt angle θ may be set according to the thickness of the flow guide 23. If the thickness of the flow guide 23 is relatively large, the tilt angle θ may be set to a relatively large value. For example, when the thickness of the flow guide 23 is approximately 1 mm, the tilt angle θ may be greater than or equal to 5°. Conversely, if the thickness of the flow guide 23 is relatively small, the tilt angle θ is also relatively small. For example, when the thickness of the flow guide 23 is approximately 0.5 mm, the tilt angle θ may be set to approximately 0.25°. In view of the limited internal space of the battery cell 20, in order to increase the energy density of the battery cell 20, the thickness of the flow guide 23 is usually relatively small. Therefore, the tilt angle θ is usually set to be less than or equal to 0.25° to reduce the footprint of the flow guide 23.

In this embodiment of this application, in order to further improve the infiltration efficiency of the electrolyte solution injected between the first electrode assembly 221 and the second electrode assembly 222 through the through-hole 232, an insulation structure 24 may be further disposed between the first electrode assembly 221 and the second electrode assembly 222.

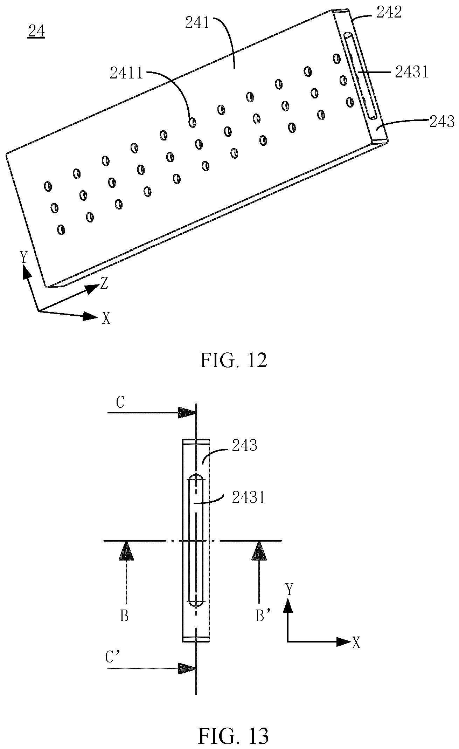

FIG. 11 is another possible schematic exploded view of a battery cell 20 according to an embodiment of this application. The battery cell 20 shown in FIG. 11 may be another possible schematic exploded view of the battery cell 20 shown in FIG. 3. As shown in FIG. 11, the battery cell 20 shown in FIG. 4 differs in that the battery cell 20 shown in FIG. 11 further includes an insulation structure 24. FIG. 12 is a schematic structural diagram of an insulation structure 24 according to an embodiment of this application. As shown in FIG. 11 and FIG. 12, the insulation structure 24 is disposed between the first electrode assembly 221 and the second electrode assembly 222. The insulation structure 24 includes a second wall 241 and a third wall 241. The second wall 241 is opposite to a first end face 2211 of the first electrode assembly 221. The third wall 242 is opposite to a second end face 2221 of the second electrode assembly 222. A first through-hole 2411 is created on the second wall 241. A second through-hole 2421 is created on the third wall 242. A third through-hole 2431 is created on a first surface 243 of the insulation structure 24, the first surface being oriented toward the first wall 213. The third through-hole 2431 is configured to guide the electrolyte solution injected through the injection port 2131 into the interior of the insulation structure 24. In this way, the electrolyte solution inside the insulation structure 24 flows to the first electrode assembly 221 through the first through-hole 2411, and flows to the second electrode assembly 222 through the second through-hole 2421.

Therefore, during injection of the electrolyte solution into the battery cell 20 in this embodiment of this application, the electrolyte solution flows into the battery cell 20 through the injection port 2131. The electrolyte solution is collected by the liquid collection tank 231 first, and then flows between the first electrode assembly 221 and the second electrode assembly 222 through the through-hole 232. A hollow insulation structure 24 is disposed between the first electrode assembly 221 and the second electrode assembly 222, and a third through-hole 2431 is created on the first surface 243 of the insulation structure 24, the first surface being oriented toward the first wall 213. Therefore, the electrolyte solution flowing out of the through-hole 232 can flow into the hollow insulation structure 24 through the third through-hole 2431. In this way, the electrolyte solution inside the insulation structure 24 can further flow to the first electrode assembly 221 through the first through-hole 2411 on the second wall 241 corresponding to the first end face 2211. This part of electrolyte solution infiltrates the first electrode assembly 221 through the first end face 2211. In addition, the electrolyte solution inside the insulation structure 24 can further flow to the second electrode assembly 222 through the second through-hole 2421 on the third wall 242 corresponding to the second end face 2221. This part of electrolyte solution infiltrates the second electrode assembly 222 through the second end face 2221. In this way, the effect of uniformly and quickly infiltrating the two electrode assemblies 22 is achieved, and the infiltration efficiency for the battery cell 20 is improved.

In contrast, if no insulation structure such as insulation structure 24 is disposed between the first electrode assembly 221 and the second electrode assembly 222, then the gap between the first electrode assembly 221 and the second electrode assembly 222 is relatively small. After flowing out through the through-hole 232, the electrolyte solution needs to slowly seep by way of the gap between the first electrode assembly 221 and the second electrode assembly 222, and then permeate into the first electrode assembly 221 through the first end face 2211 of the first electrode assembly 221, and permeate into the second electrode assembly 22 through the second end face 2221 of the second electrode assembly 222. The whole process is slow. If the injection of the electrolyte solution through the injection port 2131 is too fast, most of the electrolyte solution will flow in other directions, thereby impairing the infiltration effect for the two electrode assemblies 22.

Alternatively, if a solid insulation structure is disposed between the first electrode assembly 221 and the second electrode assembly 222, then the electrolyte solution flows to the solid insulation structure after flowing out through the through-hole 232. A part of the electrolyte solution slowly seeps into the first electrode assembly 221 through the gap between the solid insulation structure and the first electrode assembly 221, and another part of the electrolyte solution slowly seeps into the second electrode assembly 222 through the gap between the solid insulation structure and the second electrode assembly 222. Still a remaining part of the electrolyte solution splashes on a surface of the solid insulation structure, the surface being oriented toward the first wall 213. The splash not only affects the flow speed of the electrolyte solution to the first electrode assembly 221 and the second electrode assembly 222, but also affects the infiltration effect for the first electrode assembly 221 and the second electrode assembly 222.

Therefore, the hollow insulation structure 24 in this embodiment of this application can well solve the above problem and reasonably guide the flow direction of the electrolyte solution. In this way, the electrolyte solution quickly infiltrates the first electrode assembly 221 and the second electrode assembly 222, thereby improving the infiltration efficiency, improving the infiltration effect for the two electrode assemblies 22, and in turn, improving the infiltration efficiency and electrochemical performance of the battery cell 20. In addition, the insulation structure 24 may be further configured to achieve electrical insulation between the first electrode assembly 221 and the second electrode assembly 222 without a need to dispose an additional insulation component, thereby saving the internal space of the battery cell 20.

In this embodiment of this application, an orthographic projection of the through-hole 232 on the bottom wall 2311 of the liquid collection tank 231 toward the first surface 243 is located inside a region in which the third through-hole 2431 is located. In this way, during injection of the electrolyte solution through the injection port 2131, the electrolyte solution collected in the liquid collection tank 231 can flow out through the through-hole 232, and can all flow to the third through-hole 2431 under the action of the gravity of the electrolyte solution, and then penetrate into the insulation structure 24 through the third through-hole 2431. In this way, the electrolyte solution flowing out of the through-hole 232 is prevented from splashing to other positions in the battery cell 20 and impairing the infiltration efficiency of the electrolyte solution in a case that the through-hole 232 of the liquid collection tank 231 deviates from the third through-hole 2431.

The following describes the insulation structure 24 in an embodiment of this application in detail with reference to drawings.

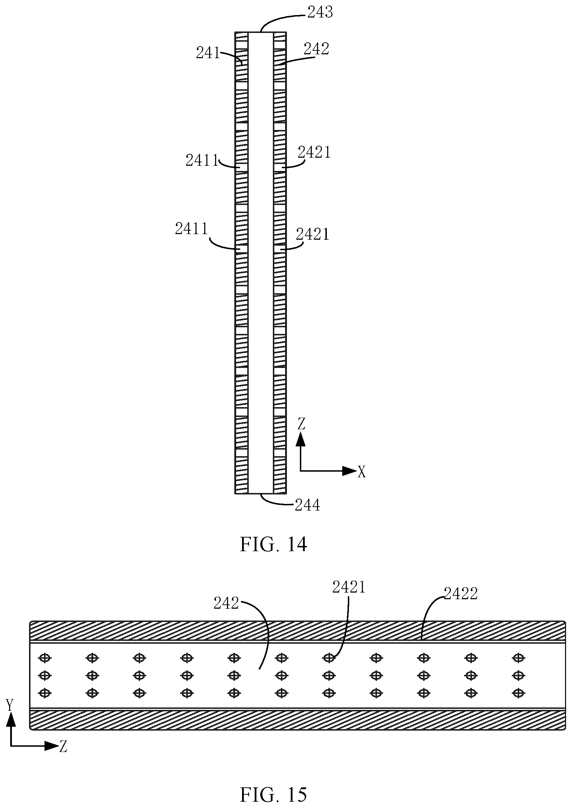

FIG. 13 is a schematic top view of an insulation structure 24 according to an embodiment of this application, that is, FIG. 13 is a schematic diagram of a first surface 243 of the insulation structure 24. FIG. 14 is a cross-sectional schematic view of an insulation structure 24 according to an embodiment of this application. FIG. 14 may be a cross-sectional view along a B-B' direction shown in FIG. 13, that is, the cross-section shown in FIG. 14 is a plane perpendicular to the second direction Y FIG. 15 is another cross-sectional schematic view of an insulation structure 24 according to an embodiment of this application. FIG. 15 may be a cross-sectional view along a C-C' direction shown in FIG. 13, that is, the cross-section shown in FIG. 15 is a plane perpendicular to the first direction X.

In this embodiment of this application, the insulation structure 24 may be in any regular or irregular shape. For ease of description, this application is described by using an example in which the insulation structure 24 is cuboidal. On the one hand, the cuboidal insulation structure 24 facilitates processing. On the other hand, inside a cuboidal shell 21 and between the two electrode assemblies 22 that are in a shape similar to a cuboid, the cuboidal insulation structure 24 is more space-saving and can improve the space utilization rate inside the battery cell 20.

As shown in FIG. 11 to FIG. 15, the insulation structure 24 further includes a second surface 244 corresponding to the first surface 243. The second surface 244 is far away from the first wall 213 and opposite to the first surface 243. Further, a fourth through-hole is created on the second surface 244. The fourth through-hole is configured to allow the electrolyte solution inside the insulation structure 24 to flow to the first electrode assembly 221 and the second electrode assembly 222 through the fourth through-hole, so as to further accelerate the outflow speed of the electrolyte solution in the insulation structure 24, that is, to accelerate the infiltration speed of the electrolyte solution infiltrating the first electrode assembly 221 and the second electrode assembly 222. Alternatively, in contrast, the second surface 244 may be a wall of the insulation structure 24. That is, the fourth through-hole is not created on the second surface 244. In this case, the electrolyte solution in the insulation structure 24 flows out just through the first through-hole 2411 on the second wall 241 and the second through-hole 2421 on the third wall 242.

Understandably, the insulation structure 24 in this embodiment of this application is a hollow structure. The insulation structure 24 may be implemented in various ways. For example, the insulation structure 24 may be formed by creating a through hole in a solid insulation material. Specifically, as shown in FIG. 11 to FIG. 15, the insulation structure 24 in this embodiment of this application may be formed by processing a solid plate-shaped insulation material.

For example, as shown in FIG. 11 to FIG. 15, a through-hole may be created in the solid insulation material. The through-hole runs through the entire insulation material from the first surface 243 to the second surface 244. In this way, the solid insulation material can be made into a hollow structure to form a second wall 241 and a third wall 242 opposite to each other. Subsequently, the first through-hole 2411 may be created in the second wall 241, and the second through-hole 2421 may be created in the third wall 242. In addition, a third through-hole 2431 is formed in the first surface 243, and a fourth through-hole 2441 is formed in the second surface 244.

For another example, a deep groove may be created on the solid insulation material. The groove extends from the first surface 243 to the second surface 244, but does not run through the second surface 244. In this way, the solid insulation material can also be made into a hollow structure, and sidewalls of the groove include a second wall 241 and a third wall 242 opposite to each other. Subsequently, the first through-hole 2411 may be created in the second wall 241, and the second through-hole 2421 may be created in the third wall 242. In addition, the opening of the groove forms a third through-hole 2431 in the first surface 243, and the bottom wall of the groove may be configured to form a wall of the insulation structure 24. In this case, the fourth through-hole 2441 is not created in the second surface 244 of the insulation structure 24.

Understandably, in the above two embodiments, the size of the third through-hole 2431 in the first surface 243 is related to the size of a hollow part of the insulation structure 24. For example, if the diameter of the groove or through hole extending from the first surface 243 to the second surface 244 is a fixed value, then the size of the third through-hole 2431 is equal to the diameter of the groove or through-hole. For another example, if the diameter of the groove or through hole extending from the first surface 243 to the second surface 244 is not a fixed value, for example, if the diameter of the groove or through-hole gradually increases from the first surface 243 to the second surface 244, then the size of the third through-hole 2431 is equal to a minimum diameter of the diameters of the groove or through-hole, but this embodiment of this application is not limited to such examples.

In some embodiments, unlike the above two embodiments, the insulation structure 24 in some embodiments of this application may further include a fourth wall opposite to the first wall 213. The outer surface of the fourth wall is the first surface 2431. In this case, a through-hole that penetrates the fourth wall may be created in the fourth wall as a third through-hole 2431. Similarly, the insulation structure 24 may further include a fifth wall opposite to the fourth wall. The fifth wall is far away from the first wall 213. The outer surface of the fifth wall is the second surface 244. In this case, a through-hole that penetrates the fifth wall may be created in the fifth wall as a fourth through-hole, but the embodiments of this application is not limited to such examples.

Understandably, the number, position, shape, and size of the first through-holes 2411 created in the second wall 241 in an embodiment of this application may be flexibly set according to practical applications. The number, position, shape, and size of the second through-holes 2421 created in the third wall 242 may also be flexibly set according to practical applications. Moreover, the number, position, shape, and size of the first through-holes 2411 created in the second wall 241 may be identical to or different from the number, position, shape, and size, respectively, of the second through-holes 2421 created in the third wall 242, without being limited herein.

In some embodiments, as shown in FIG. 11 to FIG. 15, a plurality of first through-holes 2411 are created in the second wall 241; and/or, a plurality of second through-holes 2421 are created in the third wall 242. A plurality of first through-holes 2411 are created at different positions on the second wall 241, making it convenient for the electrolyte solution inside the insulation structure 24 to flow to the first electrode assembly 221 through different first through-holes 2411 at different positions separately. In this way, the electrolyte solution can infiltrate the first electrode assembly 221 from a plurality of positions, thereby not only speeding up the infiltration speed, but also improving the infiltration effect, and infiltrating the first electrode assembly 221 as uniformly as practicable. Similarly, a plurality of second through-holes 2421 are created at different positions on the third wall 242, making it convenient for the electrolyte solution inside the insulation structure 24 to flow to the second electrode assembly 222 through different second through-holes 2421 at different positions separately. In this way, the electrolyte solution can infiltrate the second electrode assembly 222 from a plurality of positions, thereby not only speeding up the infiltration speed, but also improving the infiltration effect, and infiltrating the second electrode assembly 222 as uniformly as practicable.

In some embodiments, as shown in FIG. 11 to FIG. 15, the number of first through-holes 2411 created in the second wall 241 is equal to the number of second through-holes 2421 created in the third wall 242, and the positions of the first through-holes 2411 created in the second wall 241 correspond to the positions of the second through-holes 2421 created in the third wall 242. The second wall 241 and the third wall 242 are provided with equal numbers of first through-holes 2411 and second through-holes 2421 in corresponding positions, thereby not only facilitating processing, but also improving the infiltration efficiency. Specifically, during processing, a through-hole that runs through both the second wall 241 and the third wall 242 may be created to obtain the first through-hole 2411 in the second wall 241 and the second through-hole 2421 in the third wall 242, thereby improving the processing efficiency. During the infiltration, the number of the first through-holes 2411 is equal to the number of the second through-holes 2421, and the positions of the first through-holes correspond to the positions of the second through-holes. Therefore, the electrolyte solution inside the insulation structure 24 flows to positions in the first electrode assembly 221 that exactly correspond to positions in the second electrode assembly 222 to which the electrolyte solution flows. In this way, the infiltration effect is substantially consistent between the first electrode assembly 221 and the second electrode assembly 222, thereby improving the infiltration efficiency.

In some embodiments, as shown in FIG. 11 to FIG. 15, the first through-holes 2411 may be distributed on the second wall 241 based on a specified rule. Similarly, the second through-holes 2421 may also be distributed on the third wall 242 based on a specified rule, thereby not only improving the processing efficiency, but also improving the uniformity of infiltration.

For example, as shown in FIG. 11 to FIG. 15, a plurality of columns of first through-holes 2411 arranged along the second direction Y are created on the second wall 241. Among the plurality of columns of first through-holes 2411, each column of first through-holes 2411 includes a plurality of first through-holes 2411 arranged along the third direction Z. The first direction X, the second direction Y, and the third direction Z are perpendicular to each other. That is, the first through-holes 2411 may be distributed in a matrix on the second wall 241. Further, the distances between the plurality of columns of first through-holes 2411 may be set to be equal, and the distances between a plurality of first through-holes 2411 in the same column may also be set to be equal. In this way, the plurality of first through-holes 2411 are evenly distributed in the second direction Y on the second wall 241, and also evenly distributed in the third direction Z, thereby maximally ensuring that the electrolyte solution penetrates into different regions of the first end face 2211 of the first electrode assembly 221, and improving the uniformity of infiltration for the first electrode assembly 221.

Similar to the second wall 241, the second through-holes 2421 may also be distributed in a matrix on the third wall 242. As shown in FIG. 11 to FIG. 15, a plurality of columns of second through-holes 2421 arranged along the second direction Y are created on the third wall 242. Among the plurality of columns of second through-holes 2421, each column of second through-holes 2421 includes a plurality of second through-holes 2421 arranged along the third direction Z. The first direction X, the second direction Y, and the third direction Z are perpendicular to each other. Further, the distances between the plurality of columns of second through-holes 2421 may be set to be equal, and the distances between a plurality of second through-holes 2421 in the same column may also be set to be equal. In this way, the plurality of second through-holes 2421 are evenly distributed in the second direction Y on the third wall 242, and also evenly distributed in the third direction Z, thereby maximally ensuring that the electrolyte solution penetrates into different regions of the second end face 2221 of the second electrode assembly 222, and improving the uniformity of infiltration for the second electrode assembly 222.

Therefore, during injection of the electrolyte solution into the battery cell 20 in this embodiment of this application, the electrolyte solution flows into the battery cell 20 through the injection port 2131. The electrolyte solution is collected by the liquid collection tank 231 first, and then flows between the first electrode assembly 221 and the second electrode assembly 222 through the through-hole 232. A hollow insulation structure 24 is disposed between the first electrode assembly 221 and the second electrode assembly 222, and a third through-hole 2431 is created on the first surface 243 of the insulation structure 24, the first surface being oriented toward the first wall 213. Therefore, the electrolyte solution flowing out of the through-hole 232 can flow into the hollow insulation structure 24 through the third through-hole 2431. In this way, the electrolyte solution inside the insulation structure 24 can further flow to the first electrode assembly 221 through the first through-hole 2411. This part of electrolyte solution infiltrates the first electrode assembly 221 through the first end face 2211 of the first electrode assembly 221. In addition, the electrolyte solution inside the insulation structure 24 can further flow to the second electrode assembly 222 through the second through-hole 2421. This part of electrolyte solution infiltrates the second electrode assembly 222 through the second end face 2221 of the second electrode assembly 222. In this way, the effect of uniformly and quickly infiltrating the two electrode assemblies 22 is achieved, and the infiltration efficiency for the battery cell 20 is improved.

Described above are the battery cell, battery, and electrical device according to some embodiments of this application. The following describes a method and equipment for manufacturing a battery cell according to some embodiments of this application. For information not detailed in the following embodiments, reference may be made to the preceding embodiments.

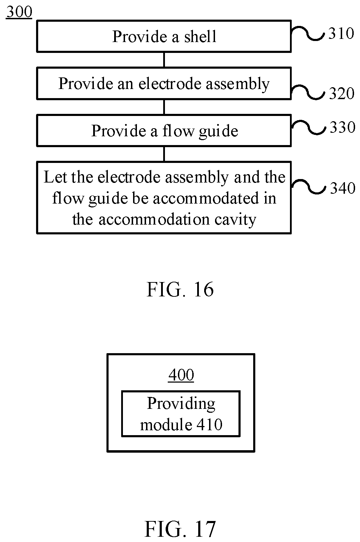

FIG. 16 is a schematic flowchart of a method 300 for manufacturing a battery cell 20 according to an embodiment of this application. As shown in FIG. 16, the method 300 may include: S310: providing a shell 21, where the shell 21 includes an accommodation cavity, the shell 21 includes a first wall 213, and an injection port 2131 is created on the first wall 213; S320: providing an electrode assembly 22; S330: providing a flow guide 23, where the flow guide 23 includes a liquid collection tank 231; and, S340: letting the electrode assembly 22 and the flow guide 23 be accommodated in the accommodation cavity, and disposing the flow guide 23 between the first wall 213 and the electrode assembly 22. An opening of the liquid collection tank 231 is oriented toward the first wall 213. A through-hole 232 is created on a bottom wall 2311 of the liquid collection tank 231. The liquid collection tank 231 is configured to collect an electrolyte solution injected through the injection port 2131, and the electrolyte solution in the liquid collection tank 231 flows to the electrode assembly 22 through the through-hole 232.

FIG. 17 is a schematic block diagram of equipment 400 for manufacturing a battery cell 20 according to an embodiment of this application. As shown in FIG. 17, the equipment 400 may include: a providing module 410. Specifically, the providing module 410 is configured to: provide a shell 21, where the shell 21 includes an accommodation cavity, the shell 21 includes a first wall 213, and an injection port 2131 is created on the first wall 213; provide an electrode assembly 22; provide a flow guide 23, where the flow guide 23 includes a liquid collection tank 231; and let the electrode assembly 22 and the flow guide 23 be accommodated in the accommodation cavity, and dispose the flow guide 23 between the first wall 213 and the electrode assembly 22. An opening of the liquid collection tank 231 is oriented toward the first wall 213. A through-hole 232 is created on a bottom wall 2311 of the liquid collection tank 231. The liquid collection tank 231 is configured to collect an electrolyte solution injected through the injection port 2131, and the electrolyte solution in the liquid collection tank 231 flows to the electrode assembly 22 through the through-hole 232.

Although this application has been described with reference to exemplary embodiments, various improvements may be made to the embodiments without departing from the scope of this application, and some components described in the embodiments may be replaced with equivalents. Particularly, to the extent that no structural conflict exists, various technical features mentioned in different embodiments may be combined in any manner. This application is not limited to the specific embodiments disclosed herein, but includes all technical solutions falling within the scope of the claims.

## Claims

1. A battery cell, comprising:
a shell (21), wherein the shell (21) comprises an accommodation cavity and a first wall (213), and an injection port (2131) is created on the first wall (213);
an electrode assembly (22), accommodated in the accommodation cavity; and
a flow guide (23), disposed between the first wall (213) and the electrode assembly (22), wherein the flow guide (23) comprises a liquid collection tank (231), an opening of the liquid collection tank (231) is oriented toward the first wall (213), a through-hole (232) is created on a bottom wall (2311) of the liquid collection tank (231), the liquid collection tank (231) is configured to collect an electrolyte solution injected through the injection port (2131), and the electrolyte solution in the liquid collection tank (231) flows to the electrode assembly (22) through the through-hole (232).

2. The battery cell according to claim 1, wherein an orthographic projection of the injection port (2131) toward the flow guide (23) is located on the bottom wall (2311) of the liquid collection tank (231).

3. The battery cell according to claim 2, wherein the bottom wall (2311) of the liquid collection tank (231) tilts against a first flat face (2312) so that the electrolyte solution in the liquid collection tank (231) converges toward the through-hole (232), and the first flat face (2312) is perpendicular to an axis of the injection port (2131).

4. The battery cell according to claim 3, wherein a tilt angle of the bottom wall (2311) of the liquid collection tank (231) against the first flat face (2312) is greater than 0° and less than 1°.

5. The battery cell according to any one of claims 1 to 4, wherein the battery cell comprises two electrode assemblies (22) arranged along a first direction, the through-hole (232) corresponds to a position between the two electrode assemblies (22) so that the electrolyte solution in the liquid collection tank (231) flows between the two electrode assemblies (22) through the through-hole (232), and the first direction is perpendicular to an axial direction of the injection port (2131).

6. The battery cell according to claim 5, wherein the two electrode assemblies (22) comprise a first electrode assembly (221) and a second electrode assembly (222), and a first end face (2211) of the first electrode assembly (221) is oriented toward the second electrode assembly (222);
the first electrode assembly (221) comprises a first electrode plate and a second electrode plate, the first electrode plate and the second electrode plate are wound around a winding axis, the winding axis is parallel to the first direction, and the first end face (2211) is perpendicular to the winding axis; or
the first electrode assembly (221) comprises a plurality of first electrode plates and a plurality of second electrode plates, the plurality of first electrode plates and the plurality of second electrode plates are stacked alternately along a second direction, the second direction is perpendicular to the first direction, and the first end face (2211) is perpendicular to the first direction; or
the first electrode assembly (221) comprises a first electrode plate and a plurality of second electrode plates, the first electrode plate comprises a plurality of stacked sections and a plurality of bent sections, each bent section is configured to connect two adjacent stacked sections, the plurality of second electrode plates and the plurality of stacked sections are stacked alternately along a second direction, the second direction is perpendicular to the first direction, and the first end face (2211) is perpendicular to the first direction.

7. The battery cell according to claim 5 or 6, wherein the battery cell is cuboidal, and the first direction is a length direction of the battery cell.

8. The battery cell according to any one of claims 5 to 7, wherein the two electrode assemblies (22) are electrically insulated from each other.

9. The battery cell according to any one of claims 5 to 8, wherein, among the two electrode assemblies (22), tabs of a same electrode assembly (22) are disposed on a same end face, and a tab of one of the electrode assemblies (22) and a tab of the other of the electrode assemblies (22) are oriented in opposite directions and both oriented outward from the battery cell.

10. The battery cell according to any one of claims 1 to 9, wherein the battery cell further comprises:
an insulator (25), wherein: the insulator (25) is disposed on an outer surface of the electrode assembly (22), the insulator (25) is configured to isolate the electrode assembly (22) from the shell (21), and the flow guide (23) is fixed to the insulator (25).

11. The battery cell according to any one of claims 1 to 10, wherein the shell (21) comprises:
a housing (211), wherein the housing (211) is a hollow structure with openings at both ends of the housing (211), the two ends are opposite to each other, and the first wall (213) is any one wall of the housing (211); and
two cover plates (212), wherein the two cover plates (212) are configured to fit and cover the openings at the two ends of the housing (211) respectively.

12. The battery cell according to claim 11, wherein the first wall (213) is a smallest-area wall of the housing (211).

13. The battery cell according to any one of claims 1 to 12, wherein a pressure relief mechanism (2133) is disposed on the first wall (213), and the pressure relief mechanism (2133) is configured to be actuated when an internal pressure or temperature of the battery cell reaches a threshold, so as to release the internal pressure of the battery cell.

14. A battery, comprising:
a plurality of the battery cells according to any one of claims 1 to 13.

15. An electrical device, comprising:
a plurality of the battery cells according to any one of claims 1 to 13, wherein the battery cells are configured to provide electrical energy for the electrical device.

16. A method for manufacturing a battery cell, comprising:
providing a shell (21), wherein the shell (21) comprises an accommodation cavity, the shell (21) comprises a first wall (213), and an injection port (2131) is created on the first wall (213);
providing an electrode assembly (22);
providing a flow guide (23), wherein the flow guide (23) comprises a liquid collection tank (231); and
letting the electrode assembly (22) and the flow guide (23) be accommodated in the accommodation cavity, and disposing the flow guide (23) between the first wall (213) and the electrode assembly (22), wherein: an opening of the liquid collection tank (231) is oriented toward the first wall (213), a through-hole (232) is created on a bottom wall (2311) of the liquid collection tank (231), the liquid collection tank (231) is configured to collect an electrolyte solution injected through the injection port (2131), and the electrolyte solution in the liquid collection tank (231) flows to the electrode assembly (22) through the through-hole (232).

17. A piece of equipment for manufacturing a battery cell, comprising: a providing module (410), configured to:
provide a shell (21), wherein the shell (21) comprises an accommodation cavity, the shell (21) comprises a first wall (213), and an injection port (2131) is created on the first wall (213);
provide an electrode assembly (22);
provide a flow guide (23), wherein the flow guide (23) comprises a liquid collection tank (231); and
let the electrode assembly (22) and the flow guide (23) be accommodated in the accommodation cavity, and dispose the flow guide (23) between the first wall (213) and the electrode assembly (22), wherein: an opening of the liquid collection tank (231) is oriented toward the first wall (213), a through-hole (232) is created on a bottom wall (2311) of the liquid collection tank (231), the liquid collection tank (231) is configured to collect an electrolyte solution injected through the injection port (2131), and the electrolyte solution in the liquid collection tank (231) flows to the electrode assembly (22) through the through-hole (232).
